Europäisches Patentamt

European Patent Office

Office européen des brevets

(19)

(11) **EP 1 478 999 B1**

(12) **EUROPÄISCHE PATENTSCHRIFT**

| | |
|---|---|
| (45) Veröffentlichungstag und Bekanntmachung des Hinweises auf die Patenterteilung:<br>**08.06.2005 Patentblatt 2005/23** | (51) Int Cl.⁷: **G06F 7/00** |
| (21) Anmeldenummer: 03727356.2 | (86) Internationale Anmeldenummer:<br>**PCT/EP2003/004284** |
| (22) Anmeldetag: **24.04.2003** | (87) Internationale Veröffentlichungsnummer:<br>**WO 2003/093968 (13.11.2003 Gazette 2003/46)** |

(54) **VORRICHTUNG UND VERFAHREN ZUM UMRECHNEN EINES TERMS**

DEVICE AND METHOD FOR CONVERTING A TERM

DISPOSITIF ET PROCEDE POUR CONVERTIR UN TERME

| | |
|---|---|
| (84) Benannte Vertragsstaaten:<br>**DE FR** | (74) Vertreter: **Schoppe, Fritz, Dipl.-Ing. et al**<br>**Patentanwälte**<br>**Schoppe, Zimmermann, Stöckeler & Zinkler**<br>**Postfach 246**<br>**82043 Pullach bei München (DE)** |
| (30) Priorität: **29.04.2002 DE 10219161** | |
| (43) Veröffentlichungstag der Anmeldung:<br>**24.11.2004 Patentblatt 2004/48** | (56) Entgegenhaltungen:<br>**US-A- 5 644 639** |
| (73) Patentinhaber: **Infineon Technologies AG**<br>**81669 München (DE)** | • **FISCHER W ET AL: "INCREASING THE BITLENGTH OF A CRYPTO-COPROCESSOR" CRYPTOGRAPHIC HARDWARE AND EMBEDDED SYSTEMS. INTERNATIONAL WORKSHOP, XX, XX, 13. August 2002 (2002-08-13), Seiten 71-81, XP001160522** |
| (72) Erfinder:<br>• **FISCHER, Wieland**<br>**80469 München (DE)**<br>• **SEIFERT, Jean-Pierre Mail Stop JF2-55**<br>**Hillsborough, OR 97124 (US)** | • **WALTER COLIN D: "Fast Modular Multiplication Using 2-Power Radix" INTERNATIONAL JOURNAL OF COMPUTER MATHEMATICS, Bd. 3, 1991, Seiten 21-28, XP002272738** |

**Beschreibung**

Die vorliegende Erfindung bezieht sich auf Rechenalgorithmen und insbesondere auf Rechenalgorithmen, die für kryptographische Anwendungen benötigt werden.

Insbesondere in der Public-Key-Kryptographie, jedoch auch in anderen Kryptographiegebieten, wachsen die Schlüssellängen stetig. Dies ist darin begründet, daß auch die Sicherheitsanforderungen an solche kryptographische Algorithmen immer mehr zunehmen. Anhand des RSA-Verfahrens als Vertreter eines asymmetrischen Kryptographiekonzepts, also eines Public-Key-Verfahrens, nimmt die Sicherheit gegenüber sogenannten Brute-Force-Angriffen mit der verwendeten Schlüssellänge zu. Brute-Force-Angriffe sind Angriffe auf einen kryptographischen Algorithmus, bei dem durch Durchprobieren sämtlicher Möglichkeiten auf einen Schlüssel geschlossen werden soll. Es ist unmittelbar einsichtig, daß mit zunehmender Schlüssellänge die Zeit, die theoretisch für einen Brute-Force-Angriff benötigt wird, um alle Möglichkeiten durchzuprobieren, stark ansteigt.

In diesem Zusammenhang sei angemerkt, daß zu früheren Zeiten RSA-Anwendungen mit Schlüssellängen von 512 Bits als ausreichend angesehen wurden. Aufgrund technischer und mathematischer Fortschritte der "Gegenseite" wurden dann die Schlüssellängen für typische RSA-Anwendungen auf 1024 Bits erhöht. Inzwischen wird von manchen Seiten die Ansicht vertreten, daß auch diese Schlüssellänge nicht ausreichend ist, so daß RSA-Schlüssellängen von 2048 Bits angestrebt werden.

Wenn andererseits existierende kryptographische Coprozessoren, wie z. B. auf SmartCards, betrachtet werden, so ist zu sehen, daß selbstverständlich der Wunsch besteht, auch RSA-Anwendungen mit beispielsweise 2048 Bits Schlüssellängen auf kryptographischen Schaltungen laufen zu lassen, die eigentlich nur für Schlüssellängen von z. B. 1024 Bits entwickelt worden sind. So ist es gerade ein Kennzeichen von arithmetischen Coprozessoren für existierende Smart-Card-Anwendungen, daß sie für eine feste Bitlänge entwickelt worden sind, die nicht für die neuesten Sicherheitsanforderungen geeignet sind, d. h. zu klein sind. Dies führt dazu, daß beispielsweise ein 2048-Bit-RSA-Algorithmus auf 1024 Bit-Coprozessoren nicht effizient gehandhabt werden können. Für RSA-Anwendungen ist beispielsweise der Chinesische Restsatz (CRT; CRT = Chinese Remainder Theorem) bekannt, bei dem eine modulare Exponentiation mit großer Schlüssellänge in zwei modulare Exponentiationen mit halb so großer Schlüssellänge zerlegt wird, wonach die Ergebnisse der beiden modularen Exponentiationen halber Länge entsprechend zusammengefaßt werden.

In jüngster Zeit hat sich herausgestellt, daß der chinesische Restsatz besonders anfällig gegenüber DFA-Angriffen (DFA = Differential Fault Analysis) ist.

Ein Problem bei vielen Verfahren ist daher das "Aufdoppeln" der sogenannten modularen Multiplikation, die eine zentrale Operation in kryptographischen Berechnungen ist. So kann eine modulare Exponentiation in viele modulare Multiplikationen zerlegt werden, d. h. in eine Operation, bei dem ein Produkt eines ersten Operanden A und eines zweiten Operanden B in einer Restklasse bezüglich eines Moduls N berechnet wird. Wenn die Operanden A und B jeweils 2 n Bits haben, so werden typischerweise Rechenwerke verwendet, die eine Länge von 2 n Bits haben. Diese Rechenwerke werden aufgrund ihrer hohen Länge als Langzahlrechenwerke bezeichnet, im Gegensatz zu beispielsweise klassischen 8-, 16-, 32- oder 64-Bit-Architekturen, die z. B. für PC- oder Workstation-Prozessoren eingesetzt werden.

Wünsche bestehen daher dahingehend, eine modulare Multiplikation A * B mod N mit Zahlen A, B und N der Bit-Länge 2 n auf einem n-Bit-Rechenwerk auszuführen. Dies ist sehr zeitaufwendig, da die Zahlen A, B, N, ... immer nur bruchstückweise geladen werden können, weshalb konventionelle Methoden, sofern sie nicht gänzlich versagen, organisatorisch aufwendig und fehleranfällig sind. In der Technik gibt es mehrere Verfahren, mit denen dieses Problem bisher gelöst worden ist. Diese Verfahren sind unter dem Stichwort Montgomery-Multiplikation, normale Multiplikation, z. B. mit Karatsuba-Ofman und späterer Reduktion, wie z. B. Barret-Reduktion, bekannt.

Ein weiteres Konzept, bei dem eine Montgomery-Rechnung in einem "CRT-Fenster" verwendet wird, ist in P. Pailler, "Lowcost double size modular exponentiation or how to stretch y-our cryptocoprocessor" dargelegt.

Sämtliche derartigen Konzepte sind aufwendig hinsichtlich der Rechenzeit und der Datenorganisation und daher nicht immer effizient.

In der am gleichen Tag eingereichten deutschen Patentanmeldung mit dem Titel "Vorrichtung und Verfahren zum Berechnen eines Ergebnisses einer modularen Multiplikation", wird ein Konzept beschrieben, bei dem eine modulare Multiplikation für Operanden von 2 n Bits in mehrere sogenannte MMD-Operationen umgesetzt werden, für die Operanden der halben Länge, also mit n Bits, ausreichend sind. Eine MMD-Operation liefert neben dem Rest, der sich durch A x B mod N ergibt, auch das Ergebnis der ganzzahligen Division, d. h. der DIV-Operation, wobei dieses Ergebnis auch als ganzzahliger Quotient Q bezeichnet ist.

Allgemein führt die Operation T mod N zu einem Rest R, wenn ein Term T bezüglich eines Moduls N reduziert wird. Die Operation T div N liefert dagegen den ganzzahligen Quotienten hinsichtlich des Moduls N, so daß der Term T aus Q x N + R rekonstruierbar ist. Die MMD-Operation (MMD = MultModDiv) dient daher einer Umrechnung eines beliebigen Terms T in einen ganzzahligen Quotienten Q und einen Rest R bezüglich eines Moduls N.

In der üblichen modularen Arithmetik, die für Kryptographietechniken verwendet wird, wird normalerweise das Ergebnis der DIV-Operation, also der ganzzahlige Quotient nicht benötigt und auch nicht berechnet. Das oben beschriebenen Konzept basiert jedoch darauf, auch die DIV-Information, also den ganzzahligen Quotienten zu verwerten. So können auch andere Anwendungen in der Technik existieren, bei denen nicht nur das Ergebnis der MOD-Operation, also der Rest, benötigt wird, sondern bei denen auch der ganzzahlige Quotient, also das Ergebnis der DIV-Operation benötigt wird.

Die Aufgabe der vorliegenden Erfindung besteht darin, ein Konzept zum Umrechnen eines Terms zu schaffen, durch das das Ergebnis der DIV-Operation ableitbar ist, auch wenn kein eigener DIV-Befehl von einem Prozessor zur Verfügung gestellt wird.

Diese Aufgabe wird durch eine Vorrichtung zum Umrechnen nach Patentanspruch 1, ein Verfahren zum Umrechnen nach Patentanspruch 11 oder durch ein Computer-Programm nach Patentanspruch 13 gelöst.

Der vorliegenden Erfindung liegt die Erkenntnis zugrunde, daß in Rechenwerken, bei denen lediglich Modulo-Arithmetik-Einheiten vorhanden sind, also Recheneinheiten, die zwar den Rest berechnen können, nicht jedoch den ganzzahligen Quotienten berechnen können, der ganzzahlige Quotient unter Verwendung von zwei modularen Reduktionen ermittelbar ist.

Für Anwendungen, bei denen das Ergebnis der DIV-Operation benötigt wird, obgleich lediglich eine MOD-Arithmetik vorhanden ist, wird gemäß der vorliegenden Erfindung das Ergebnis der DIV-Operation, also der ganzzahlige Quotient, lediglich unter Verwendung der Modulo-Arithmetik, also eines modularen Reduktionsbefehls, berechnet.

Hierzu wird der Term modular reduziert bezüglich des Moduls, um einen Rest zu erhalten. Daraufhin wird der Term noch einmal modular reduziert, nun jedoch bezüglich eines Hilfsmoduls, der größer als der Modul ist, um einen Hilfs-Rest zu erhalten. Durch Kombination des Rests und des Hilfs-Rests wird dann der ganzzahlige Quotient erhalten.

Vorzugsweise ist der Hilfs-Modul um "1" größer als der Modul, und die Einrichtung zum Kombinieren ist ausgebildet, um den Hilfs-Rest von dem Rest zu subtrahieren, um den ganzzahligen Quotienten zu erhalten. Stellt sich heraus, daß das Ergebnis der Subtraktion kleiner 0 ist, so wird bei einem bevorzugten Ausführungsbeispiel der vorliegenden Erfindung der Hilfs-Modul hinzuaddiert, um den ganzzahligen Quotienten zu erhalten. Ist das Subtraktionsergebnis dagegen positiv, so sind keine weiteren Nachbehandlungsschritte erforderlich. Das Subtraktionsergebnis entspricht direkt dem ganzzahligen Quotienten.

Bevorzugte Ausführungsbeispiele der vorliegenden Erfindung werden nachfolgend Bezug nehmend auf die beiliegenden Zeichnungen detailliert erläutert. Es zeigen:

Fig. 1     ein Blockschaltbild einer erfindungsgemäßen Vorrichtung zum Umrechnen eines Terms; und

Fig. 2     eine Ablaufdarstellung eines bevorzugten Ausführungsbeispiels zum Umrechnen des Terms T ohne und mit Initialisierung.

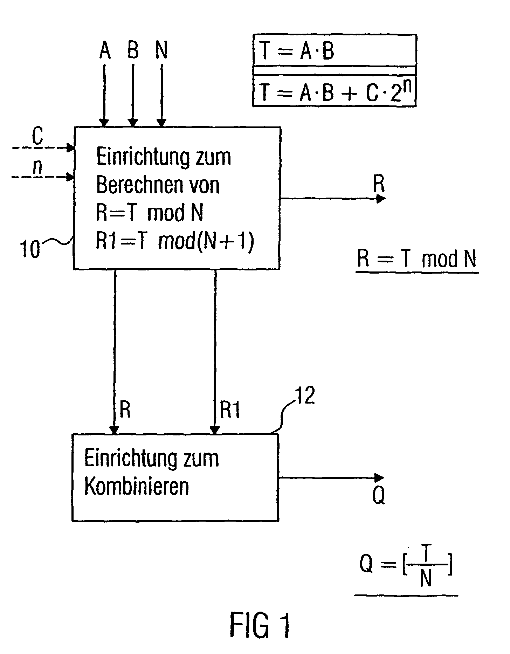

Fig. 1 zeigt ein Blockschaltbild einer erfindungsgemäßen Vorrichtung zum Umrechnen eines Terms T, der ein Produkt eines ersten Operanden A und eines zweiten Operanden B aufweist, in eine Darstellung, die einen ganzzahligen Quotienten Q bezüglich eines Moduls und einen Rest R aufweist, wobei der ganzzahlige Quotient durch T/N definiert ist, wobei T der Term ist, wobei N der Modul ist, und wobei der Rest R durch T mod N definiert ist.

Die erfindungsgemäße Vorrichtung umfaßt eine Einrichtung 10 zum modularen Reduzieren des Terms bezüglich des Moduls N, um den Rest R zu erhalten. Die Einrichtung zum modularen Reduzieren ist ferner ausgebildet, um den Term bezüglich eines Hilfs-Moduls zu reduzieren, wobei der Hilfs-Modul größer als der Modul ist, um einen Hilfs-Rest zu erhalten. Die erfindungsgemäße Vorrichtung umfaßt schließlich eine Einrichtung 12 zum Kombinieren des Rests R und des Hilfs-Rests R1, um den ganzzahligen Quotienten Q zu erhalten. Das Ergebnis der DIV-Operation, also der ganzzahlige Quotient Q, wird somit erfindungsgemäß lediglich unter Verwendung zweier modularer Reduktionen, nämlich einmal bezüglich des Moduls und ein zweites Mal bezüglich des Hilfs-Moduls berechnet.

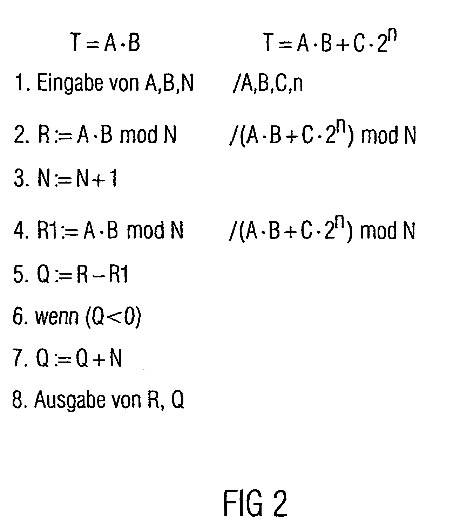

Im nachfolgenden wird anhand von Fig. 2 auf ein bevorzugtes Ausführungsbeispiel für ein erfindungsgemäßen Verfahren Bezug genommen. Betrachtet wird zum einen ein Term $T = A \times B$, wobei A ein erster Operand und B ein zweiter Operand ist. Parallel hierzu wird ein zweiter Term $T = A \times B + C \times 2^n$ betrachtet, wobei wieder A ein erster Operand ist, B ein zweiter Operand ist, und wobei ferner C ein dritter Operand ist und der Parameter n gleich der Anzahl von Bits der Operanden A, B, C und N gewählt ist. Insbesondere ist n die Anzahl von Bits von N, wobei A, B oder C auch kürzer sein können. Zunächst werden A, B, N bzw. A, B, C, n eingegeben (Schritt 1 von Fig. 2). Dann wird eine erste modulare Reduktion in einem Schritt 2 durchgeführt, um einen ersten Rest R zu erhalten.

In einem dritten Schritt wird der im zweiten Schritt verwendete Modul N um 1 inkrementiert, um einen Hilfs-Modul zu erhalten, der gleich N + 1 ist. In einem vierten Schritt wird dann der Term wieder modular reduziert, und zwar nunmehr unter Verwendung des Hilfsmoduls statt des ursprünglichen Moduls.

In einem fünften Schritt wird eine Subtraktion durchgeführt, indem von dem in dem zweiten Schritt erhaltenen Rest R der in dem vierten Schritt erhaltene Hilfs-Rest R1 abgezogen wird. Falls das in dem Schritt 5 erhaltene Subtraktionsergebnis negativ ist, was in einem Schritt 6 überprüft wird, wird zu dem Subtraktionsergebnis aus Schritt 5 der Hilfs-Modul hinzu addiert. Falls in dem Schritt 6 dagegen festgestellt wird, daß das Subtraktionsergebnis Q von Schritt 5 positiv oder 0 ist, kann der Schritt 7 entfallen. In einem abschließenden Schritt 8 werden dann die Ergebnisse, also der Rest R der modularen Multiplikation und der ganzzahlige Quotient Q ausgegeben.

Ein Vergleich von Fig. 1 und Fig. 2 ergibt, daß die Schritte 2 bis 4 von der Einrichtung 10 ausgeführt werden können, und daß die Schritte 5 bis 7 von der Einrichtung 12 ausgeführt werden können.

Im nachfolgenden wird eine Herleitung für den in Fig. 2 gegebenen Algorithmus dargelegt. Die Herleitung wird anhand des Terms T = A x B durchgeführt. Zu Zwecken der Herleitung sei angenommen, daß der erste Operand A größer oder gleich 0 und kleiner als N ist, und daß ebenfalls der zweite Operand B größer oder gleich 0 und kleiner als N ist. In diesem Fall gilt folgender Zusammenhang: A * B = Q * N + R, wobei gilt:

$$R: = (A*B) \bmod N, \ 0 <= R < N$$

Darüber hinaus wird darauf hingewiesen, daß für den ganzzahligen Quotienten Q gilt, daß er kleiner oder gleich N - 2 ist, da im größten anzunehmenden Fall (A = B = N - 1) bereits folgender Zusammenhang gilt:

$$A*B = N*(N-2)+1$$

Damit gilt:

$$A*B = Q * N + R$$

ferner gilt:

$$A*B = Q * (N+1) + (R-Q),$$

falls R-Q größer oder gleich 0 ist, gilt ferner:

$$(R-Q) = (A*B) \bmod (N+1)$$

falls R-Q kleiner 0 ist, gilt folgendes:

$$(R-Q) + (N+1) = (A*B) \bmod (N+1).$$

Also ergibt sich für Q entweder:

$$Q = ((A*B) \bmod N) - ((A*B) \bmod (N+1))$$

oder, falls die Differenz negativ ist:

$$Q = ((A*B) \bmod N) - ((A*B) \bmod (N+1)) + (N+1).$$

Das erfindungsgemäße Konzept ist besonders leicht in einen Krypto-Prozessor oder Krypto-Coprozessor nachrüstbar, da es softwaremäßig implementierbar ist und lediglich auf einen in einem solchen Prozessor typischerweise vorhandenen schnellen Befehl zur Durchführung einer modularen Multiplikation zugreifen kann. Wie es aus Fig. 2 ersichtlich ist, werden neben einfachen Additionen/Subtraktionen lediglich als aufwendigere Befehle die beiden modularen Multiplikationen in den Schritten 2 und 4 benötigt, um den ganzzahligen Quotienten zu berechnen.

Abhängig von den Gegebenheiten kann das erfindungsgemäße Konzept somit in Hardware oder in Software implementiert werden.

Die Implementation kann auf einem digitalen Speichermedium, insbesondere einer Diskette oder CD mit elektronisch auslesbaren Steuersignalen erfolgen, die so mit einem programmierbaren Computersystem bzw. Krypto-Prozessor zusammenwirken können, daß das Verfahren ausgeführt wird. Allgemein besteht die Erfindung somit auch in einem Computer-Programm-Produkt mit auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt ist die Erfindung somit als Computer-Programm mit einem Programmcode zur Durchführung des Verfahrens realisiert, wenn das Computer-Programm auf einem Computer abläuft.

Bezugszeichenliste

| | |
|---|---|
| 1 | Eingabeschritt |
| 2 | Erste modulare Reduktion |
| 3 | Modulinkrementierung |
| 4 | Zweite modulare Reduktion |
| 5 | Subtraktionsbildung |
| 6 | Vorzeichenüberprüfung |
| 7 | Additionsschritt |
| 8 | Ausgabeschritt |
| 10 | Einrichtung zum modularen Reduzieren |
| 12 | Einrichtung zum Kombinieren |

**Patentansprüche**

1. Modulo-Arithmetik-Rechenwerk, das keinen eigenen DIV-Befehl zum Berechnen eines ganzzahligen Quotienten zur Verfügung stellt, zum Umrechnen eines Terms, der ein Produkt eines ersten Operanden (A) und eines zweiten Operanden (B) aufweist, in eine Darstellung, die einen ganzzahligen Quotienten (Q) bezüglich eines Moduls und einen Rest (R) aufweist, wobei der ganzzahlige Quotient (Q) durch T/N definiert ist, wobei T der Term ist und N der Modul ist, und wobei der Rest (R) durch T mod N definiert ist, wobei N der Modul ist, mit folenden kennzeichnenden Merkmalen:

einer Einrichtung (10) zum modularen Reduzieren des Terms (T) bezüglich des Moduls (N), um den Rest (R) zu erhalten und zum modularen Reduzieren des Terms (T) bezüglich eines Hilfs-Moduls, wobei der Hilfs-Modul größer als der Modul ist, um einen Hilfs-Rest (R1) zu erhalten; und

einer Einrichtung (12) zum Kombinieren des Rests (R) und des Hilfs-Rests (R1), um den ganzzahligen Quotienten (Q) zu erhalten.

2. Vorrichtung nach Anspruch 1,
bei der der Hilfs-Modul um "1" größer als der Modul ist.

3. Vorrichtung nach Anspruch 1 oder 2,
bei der die Einrichtung (12) zum Kombinieren ausgebildet ist, um den Hilfs-Rest (R1) von dem Rest (R) zu subtrahieren, um den ganzzahligen Quotienten (Q) zu erhalten.

4. Vorrichtung nach Anspruch 1, 2 oder 3,
bei der der erste Operand und der zweite Operand größer oder gleich 0 und kleiner als der Modul sind, so daß der ganzzahlige Rest (R) kleiner oder gleich dem Modul weniger 2 ist, wobei die Einrichtung (10) zum modularen Reduzieren ferner ausgebildet ist, um den Modul bzw. den Hilfsmodul zu subtrahieren.

5. Vorrichtung nach einem der Ansprüche 1 bis 4,
bei der die Einrichtung (12) zum Kombinieren ausgebildet ist, um
den Hilfs-Rest (R1) von dem Rest (R) zu subtrahieren, um ein Subtraktionsergebnis zu erhalten,
zu überprüfen, ob das Subtraktionsergebnis negativ ist,
das Subtraktiönsergebnis als ganzzahligen Quotienten (Q) auszugeben, falls das Subtraktionsergebnis nicht negativ ist, und
zu dem Subtraktionsergebnis den Hilfs-Modul hinzu zu addieren, um den ganzzahligen Quotienten (Q) zu erhalten, falls das Subtraktionsergebnis negativ ist.

6. Vorrichtung nach einem der vorhergehenden Ansprüche,
bei der der erste Operand (A), der zweite Operand (B) und/oder der Modul (N) Größen in einem kryptographischen Algorithmus sind.

7. Vorrichtung nach einem der vorhergehenden Ansprüche,

bei der die Einrichtung (10) zum Berechnen folgende Merkmale aufweist:

eine arithmetische Einheit zum Berechnen des Rests (R);

ein erstes Register zum Speichern des Rests;

eine Einrichtung zum Inkrementieren des Moduls um "1", um den Hilfs-Modul zu erhalten;

ein zweites Register zum Speichern des Hilfs-Moduls;

eine arithmetische Einheit zum Berechnen des Hilfs-Rests;

ein drittes Register zum Speichern des Hilfs-Rests;

wobei die Einrichtung (12) zum Kombinieren ferner folgende Merkmale aufweist:

eine Einrichtung zum Subtrahieren des Hilfs-Rests von dem Rest, um ein Subtraktionsergebnis zu erhalten;

ein viertes Register zum Speichern des Subtraktions-Ergebnisses; und

eine Einrichtung zum Addieren eines Inhalts des zweiten Registers zu dem Inhalt des vierten Registers, falls das Subtraktions-Ergebnis negativ ist, und zum Laden eines Addierergebnisses in das vierte Register, so daß das erste Register den Rest und das vierte Register den ganzzahligen Quotienten enthalten.

8. Vorrichtung nach Anspruch 7,
bei der die arithmetische Einheit zum Berechnen des Rests und die arithmetische Einheit zum Berechnen des Hilfs-Rests identisch sind, wobei die arithmetische Einheit durch eine Steuereinrichtung ansteuerbar ist, die zunächst den Modul und nachfolgend den Hilfs-Modul in die arithmetische Einheit einspeist.

9. Vorrichtung nach einem der vorhergehenden Ansprüche,
bei der der Term (T) lediglich das Produkt des ersten Operanden (A) und des zweiten Operanden (B) aufweist.

10. Vorrichtung nach einem der vorhergehenden Ansprüche,
bei der der Term (T) eine Summe aus dem Produkt des ersten Operanden (A) und des zweiten Operanden (B) und einem Produkt eines dritten Operanden (C) und einem Faktor $2^n$ aufweist, wobei n eine Bitlänge des Moduls ist.

11. Verfahren zum Umrechnen eines Terms in einem Modulo-Arithmetik-Rechenwerk, das keinen eigenen DIV-Befehl zum Berechnen eines ganzzahligen Quotienten zur Verfügung stellt, wobei der Term ein Produkt eines ersten Operanden (A) und eines zweiten Operanden (B) aufweist, in eine Darstellung, die einen ganzzahligen Quotienten (Q) bezüglich eines Moduls und einen Rest (R) aufweist, wobei der ganzzahlige Quotient (Q) durch T/N definiert ist, wobei T der Term ist und N der Modul ist, und wobei der Rest (R) durch T mod N definiert ist, wobei N der Modul ist, mit folgenden Schritten:

modulares Reduzieren (10) des Terms (T) bezüglich des Moduls (N), um den Rest (R) zu erhalten und zum modularen Reduzieren des Terms (T) bezüglich eines Hilfs-Moduls, wobei der Hilfs-Modul größer als der Modul ist, um einen Hilfs-Rest (R1) zu erhalten; und

Kombinieren (12) des Rests (R) und des Hilfs-Rests (R1), um den ganzzahligen Quotienten (Q) zu erhalten.

12. Verfahren nach Anspruch 11, bei der der Schritt des modularen Reduzierens (10) folgende Teilschritte aufweist:

modulares Reduzieren des Terms unter Verwendung des Moduls; Inkrementieren des Moduls, um einen Hilfs-Modul zu erhalten;

modulares Reduzieren des Terms unter Verwendung des Hilfs-Moduls; und

bei dem der Schritt des Kombinierens (12) folgende Merkmale aufweist:

Subtrahieren des Hilfs-Rests von dem Rest, um ein Subtraktionsergebnis zu erhalten;

Subtrahieren des Hilfs-Rests von dem Rest, um ein Subtraktionsergebnis zu erhalten;

Überprüfen eines Vorzeichens des Subtraktions-Ergebnisses;

falls das Vorzeichen nicht negativ ist, Ausgeben des Subtraktionsergebnisses als ganzzahliger Quotient; und

falls das Vorzeichen negativ ist, Addieren des Hilfs-Moduls zu dem Subtraktionsergebnis, um den ganzzahligen Quotienten zu erhalten.

13. Computer-Programm mit einem Programmcode zur Durchführung des Verfahrens zum Umrechnen nach Anspruch 11 oder 12, wenn das Computer-Programm auf einem Computer abläuft.

**Claims**

1. A modulo arithmetic unit providing no separate DIV command for calculating an integer quotient for converting a term comprising a product of a first operand (A) and a second operand (B) into a representation having an integer quotient (Q) regarding a modulus and a remainder (R), the integer quotient (Q) being defined by T/N, T being the term and N being the modulus, and the remainder (R) being defined by T mod N, N being the modulus, the modulo arithmetic unit comprising the following characterizing features:

means (10) for modularly reducing the term (T) regarding the modulus (N) to obtain the remainder (R) and for modularly reducing the term (T) regarding an auxiliary modulus, the auxiliary modulus being greater than the modulus, to obtain an auxiliary remainder (R1); and

means (12) for combining the remainder (R) and the auxiliary remainder (R1) to obtain the integer quotient (Q).

2. The device according to claim 1, wherein the auxiliary modulus is greater by "1" than the modulus.

3. The device according to claims 1 or 2, wherein the means (12) for combining is formed to subtract the auxiliary remainder (R1) from the remainder (R) to obtain the integer quotient (Q).

4. The device according to any of claims 1 to 3, wherein the first operand and the second operand are larger than or equal to 0 and smaller than the modulus so that the integer remainder (R) is smaller than or equal to the modulus minus 2, the means (10) for modularly reducing further being formed to subtract the modulus or the auxiliary modulus, respectively.

5. The device according to any of claims 1 to 4, wherein the means (12) for combining is formed to subtract the auxiliary remainder (R1) from the remainder (R) to obtain a subtraction result, to check whether the subtraction result is negative,

to output the subtraction result as an integer quotient (Q) if the subtraction result is not negative, and to add the auxiliary modulus to the subtraction result to obtain the integer quotient (Q) if the subtraction result is negative.

6. The device according to any of the previous claims, wherein the first operand (A), the second operand (B) and/or the modulus (N) are quantities in a cryptographic algorithm.

7. The device according to any of the previous claims, wherein the means (10) for calculating comprises:

   an arithmetic unit for calculating the remainder (R);

   a first register for storing the remainder;

   means for incrementing the modulus by "1" to obtain the auxiliary modulus;

   a second register for storing the auxiliary modulus;

   an arithmetic unit for calculating the auxiliary remainder;

   a third register for storing the auxiliary remainder;

   wherein the means (12) for combining further comprises:

   means for subtracting the auxiliary remainder from the remainder to obtain a subtraction result;

   a fourth register for storing the subtraction result; and

   means for adding contents of the second register to the contents of the fourth register if the subtraction result is negative and for loading an adding result into the fourth register so that the first register contains the remainder and the fourth register contains the integer quotient.

8. The device according to claim 7, wherein the arithmetic unit for calculating the remainder and the arithmetic unit for calculating the auxiliary remainder are identical, wherein the arithmetic unit is controllable by control means which at first feeds the modulus and then the auxiliary modulus into the arithmetic unit.

9. The device according to any of the previous claims, wherein the term (T) only comprises the product of the first operand (A) and the second operand (B).

10. The device according to any of the previous claims, wherein the term (T) comprises a sum of the product of the first operand (A) and the second operand (B) and a product of a third operand (C) and a factor $2^n$, n being a bit length of the modulus.

11. A method for converting a term in a modulo arithmetic unit providing no separate DIV command for calculating an integer quotient, the term comprising a product of a first operand (A) and a second operand (B), into a representation having an integer quotient (Q) regarding a modulus and a remainder (R), the integer quotient (Q) being defined by T/N, T being the term and N being the modulus, and the remainder (R) being defined by T mod N, N being the modulus, comprising the following steps:

   modularly reducing (10) the term (T) regarding the modulus (N) to obtain the remainder (R) and for modularly reducing the term (T) regarding an auxiliary modulus, the auxiliary modulus being greater than the modulus, to obtain an auxiliary remainder (R1); and

   combining (12) the remainder (R) and the auxiliary remainder (R1) to obtain the integer quotient (Q).

12. The method according to claim 11, wherein the step of modularly reducing (10) comprises the following sub-steps:

   modularly reducing the term using the modulus;

   incrementing the modulus to obtain an auxiliary modulus;

   modularly reducing the term using the auxiliary modulus; and

   wherein the step of combining (12) comprises the following steps:

   subtracting the auxiliary remainder from the remainder to obtain a subtraction result;

   checking a sign of the subtraction result;

   if the sign is not negative, outputting the subtraction result as an integer quotient; and

   if the sign is negative, adding the auxiliary modulus to the subtraction result to obtain the integer quotient.

13. A computer program having a program code for performing the method for converting according to claims 11 or 12 when the computer program runs on a computer.

## Revendications

**1.** Unité de calcul arithmétique modulo, qui ne met pas à disposition d'instruction DIV propre pour calculer un quotient à nombres entiers, pour la conversion d'un terme, qui a un produit d'un premier opérande (A) et d'un deuxième opérande (B), en une représentation qui a un quotient à nombres entiers (Q), relatif à un module et un reste (R), le quotient à nombres entiers (Q) étant défini par T/N, T étant le terme et N étant le module et le reste (R) étant défini par T mod N, N étant le module, ayant les dispositions caractéristiques suivantes :

un dispositif (10), pour réduire le terme (T) de manière modulaire, relativement au module (N), pour obtenir le reste (R) et pour réduire le terme (T) de manière modulaire, relativement à un module auxiliaire, le module auxiliaire étant plus grand que le module, pour obtenir un reste auxiliaire (R1) et

un dispositif (12), pour combiner le reste (R) et le reste auxiliaire (R1), pour obtenir le quotient à nombres entiers (Q).

**2.** Dispositif selon la revendication 1, dans lequel le module auxiliaire est plus grand de "1" que le module.

**3.** Dispositif selon la revendication 1 ou 2, dans lequel le dispositif (12) de combinaison est constitué pour soustraire le reste auxiliaire (R1) du reste (R), pour obtenir le quotient à nombres entiers (Q).

**4.** Dispositif selon la revendication 1, 2 ou 3, dans lequel le premier opérande et le deuxième opérande sont supérieurs ou égaux à 0 et plus petits que le module, de sorte que le reste à nombres entiers (R) est inférieur ou égal au module moins 2, le dispositif (10) pour la réduction modulaire étant, en outre, constitué pour soustraire le module ou le module auxiliaire.

**5.** Dispositif selon l'une des revendications 1 à 4, dans lequel le dispositif (12) de combinaison est constitué pour

soustraire le reste auxiliaire (R1) du reste (R), pour obtenir un résultat de soustraction,

pour vérifier si le résultat de la soustraction est négatif,

pour extraire le résultat de la soustraction en tant que quotient à nombres entiers (Q), au cas où le résultat de la soustraction n'est pas négatif et

pour ajouter en plus, au résultat de la soustraction, le module auxiliaire, pour obtenir le quotient à nombres entiers (Q), au cas où le résultat de la soustraction est négatif.

**6.** Dispositif selon l'une des revendications précédentes,

dans lequel le premier opérande (A), le deuxième opérande (B) et / ou le module (N) sont des grandeurs dans un algorithme cryptographique.

**7.** Dispositif selon l'une des revendications précédentes,

dans lequel le dispositif (10) de calcul présente les caractéristiques suivantes :

une unité arithmétique pour le calcul du reste (R) ;
un premier registre pour enregistrer le reste ;
un dispositif pour incrémenter le module de "1", pour obtenir le module auxiliaire ;
un deuxième registre pour enregistrer le module auxiliaire ;
une unité arithmétique pour calculer le reste auxiliaire ;
un troisième registre pour enregistrer le reste auxiliaire ;
le dispositif (12) de combinaison présentant, en outre, les caractéristiques suivantes :

un dispositif de soustraction du reste auxiliaire du reste, pour obtenir un résultat de soustraction ;
un quatrième registre pour enregistrer le résultat de la soustraction et
un dispositif d'addition du contenu d'un deuxième registre au contenu du quatrième registre, au cas où le résultat de la soustraction est négatif et de chargement d'un résultat d'additionneur dans le quatrième registre, de sorte que le premier registre contient le reste et le quatrième registre contient le quotient à nombres entiers.

**8.** Dispositif selon la revendication 7, dans lequel l'unité arithmétique de calcul du reste et l'unité arithmétique de calcul du reste auxiliaire sont identiques, l'unité arithmétique pouvant être commandée par un dispositif de commande, qui injecte tout d'abord le module et, ultérieurement, le module auxiliaire dans l'unité arithmétique.

**9.** Dispositif selon l'une des revendications précédentes,
dans lequel le terme (T) comporte uniquement le produit du premier opérande (A) et du deuxième opérande (B).

10. Dispositif selon l'une des revendications précédentes,

dans lequel le terme (T) comporte une somme, issue du produit du premier opérande (A) et du deuxième opérande (B) et d'un produit d'un troisième opérande (C) et d'un facteur $2^n$, n étant une longueur de bit du module.

11. Procédé de conversion d'un terme dans une unité de calcul arithmétique modulo, qui ne met pas à disposition d'instruction DIV propre, pour calculer un quotient à nombres entiers, le terme ayant un produit d'un premier opérande (A) et d'un deuxième opérande (B), en une représentation, qui a un quotient à nombres entiers (Q), relativement à un module, et un reste (R), le quotient à nombres entiers (Q) étant défini par T/N, T étant le terme et N étant le module et le reste (R) étant défini par T mod N, N étant le module, ayant les étapes suivantes :

réduction modulaire (10) du terme (T), relativement au module (N), pour obtenir le reste (R) et pour réduire de manière modulaire le terme (T), relativement à un module auxiliaire, le module auxiliaire étant plus grand que le module, pour obtenir un reste auxiliaire (R1) et combinaison (12) du reste (R) et le reste auxiliaire (R1), pour obtenir le quotient à nombres entiers (Q).

12. Procédé selon la revendication 11,

dans lequel l'étape de réduction modulaire (10) présente les sous-étapes suivantes :

réduction modulaire du terme en utilisant le module ;
incrémentation du module, pour obtenir un module auxiliaire ;
réduction modulaire du terme en utilisant le module auxiliaire et

dans lequel l'étape de combinaison (12) présente les caractéristiques suivantes :

soustraction du reste auxiliaire du reste, pour obtenir un résultat de soustraction ; examen d'un signe du résultat de la soustraction ;
au cas où le signe n'est pas négatif, sortie du résultat de la soustraction en tant que quotient à nombres entiers et
au cas où le signe est négatif, addition du module auxiliaire au résultat de la soustraction pour obtenir le quotient à nombres entiers.

13. Programme informatique ayant un code de programme, pour réaliser le procédé de conversion selon la revendication 11 ou 12, quand le programme informatique tourne sur un ordinateur.

$$T = A \cdot B$$

$$T = A \cdot B + C \cdot 2^n$$

A  B  N

C

n

Einrichtung zum
Berechnen von
$R = T \bmod N$
$R1 = T \bmod (N+1)$

10

R

$$R = T \bmod N$$

R        R1        12

Einrichtung zum
Kombinieren

Q

$$Q = \left[ \frac{T}{N} \right]$$

## FIG 1

$$T = A \cdot B \qquad\qquad T = A \cdot B + C \cdot 2^n$$

1. Eingabe von A,B,N     /A,B,C,n

2. $R := A \cdot B \bmod N$     $/(A \cdot B + C \cdot 2^n) \bmod N$

3. $N := N + 1$

4. $R1 := A \cdot B \bmod N$     $/(A \cdot B + C \cdot 2^n) \bmod N$

5. $Q := R - R1$

6. wenn $(Q < 0)$

7. $Q := Q + N$

8. Ausgabe von R, Q

# FIG 2